# EUROPEAN PATENT SPECIFICATION

(11) **EP 3 658 452 B1**
(45) Date of publication and mention of the grant of the patent: **06.09.2023**
(21) Application number: 18838935.7
(22) Date of filing: 26.07.2018
(51) Int. Cl.: B62M 23/02

(54) **A TRANSMISSION ASSIST SYSTEM FOR A TWO-WHEELED VEHICLE**
GETRIEBEASSISTENZSYSTEM FÜR EIN ZWEIRÄDRIGES FAHRZEUG
SYSTÈME D'ASSISTANCE À LA TRANSMISSION POUR VÉHICULE À DEUX ROUES

(30) Priority: 26.07.2017 IN 201741026509
(43) Date of publication of application: 03.06.2020
(73) Proprietor: TVS Motor Company Limited, Chennai 600006 (IN)
(72) Inventor: SRINIVASA RAO, Kandregula, Chennai 600006 (IN); VINAY CHANDRAKANT, Harne, Chennai 600006 (IN)
(74) Representative: Patentanwaltskanzlei Matschnig & Forsthuber OG
(86) International application number: PCT/IB2018/055579
(87) International publication number: WO 2019/021227

(56) References cited:
- CN-U- 204 077 347
- US-A1- 2014 285 045
- US-B2- 9 010 468

## Description

### FIELD OF INVENTION

The present invention generally relates to an internal combustion engine for a saddle type vehicle. More particularly, the present invention relates to an internal combustion engine comprising a transmission system and an electric motor for a saddle type vehicle.

### BACKGROUND OF INVENTION

Saddle type two-wheeled and three-wheeled vehicles are powered by an internal combustion (IC) engine. However, due to depleting crude oil reserves and with strict environmental norms it has become desirable to design saddle type vehicles which can be powered by alternate sources of energy. Saddle type hybrid vehicles (e.g. as disclosed in CN 204 077 347 U) were developed to address above described concerns. Generally, hybrid vehicles are powered by an internal combustion engine, and an electric motor. The internal combustion engine installed on such hybrid vehicle uses fuel as any other conventional internal combustion engine. The electric motor is powered by an auxiliary power source such as a battery system located in the hybrid vehicle. The internal combustion engine and the electric motor can be used in conjunction or independently to derive power for the hybrid vehicle based on different user modes. In all hybrid vehicles, a transmission system is configured to transfer the rotary motion from the internal combustion engine and the electric motor to the wheels for driving the hybrid vehicle.

One of the major challenges involved in the design of transmission system of a small hybrid vehicle such as a saddle type vehicle is to improve efficiency of the system, improve operability and reduce transmission losses. Further, the transmission system including the electric motor has to be integrated with existing layout of the IC engine which is difficult. Also, electric motors are expensive, and consume power excessively from the battery of the hybrid vehicle. Therefore a need exists for providing an alternate means for supplying additional torque, while ensuring that power from the battery is not consumed excessively. Accordingly and conform the invention, a saddle type vehicle is provided according to the features of claim 1.

### BRIEF DESCRIPTION OF DRAWINGS

The detailed description is described with reference to the accompanying figures. The same numbers are used throughout the drawings to reference like features and components.
**Fig. 1****.** illustrates a side view of a saddle type vehicle employing an embodiment of the present subject matter.
**Fig. 2a****.** and **Fig. 2b****.** illustrate side view and top view respectively of the internal combustion engine and a transmission system thereof according to an embodiment of the present subject matter.
**Fig. 3****.** illustrates a cross sectional view of the internal combustion engine and the transmission system according to a first embodiment of the present subject matter.
**Fig. 4****.** illustrates an exploded view depicting mounting of an electric motor unit to the internal combustion engine according to a first embodiment of the present subject matter.
**Fig. 5****.** illustrates a cross sectional view of the internal combustion engine and an exploded view of the electric motor unit including a second transmission system according to a first embodiment of the present subject matter.
**Fig.6** illustrates an exploded view depicting mounting of the electric motor unit to the internal combustion engine according to a second embodiment of the present subject matter.
**Fig. 7****.** illustrates a cross sectional view of the internal combustion engine and an exploded view of the electric motor unit including a second transmission system according to a second embodiment of the present subject matter.

### DETAILED DESCRIPTION

Various features and embodiments of the present invention here will be discernible from the following further description thereof, set out hereunder. In the ensuing exemplary embodiments, the vehicle is a saddle type vehicle with a step-through frame colloquially called moped. However, it is contemplated that the disclosure in the present invention may be applied to any saddle type vehicle. The detailed explanation of the constitution of parts other than the present invention which constitutes an essential part has been omitted at suitable places.

Generally, a saddle type vehicle can either be a straddle type vehicle wherein the rider sits straddling the vehicle, or a step-through type vehicle having a floorboard wherein the rider can place his feet besides some luggage. In both the straddle and step-through type vehicles, an IC engine is disposed in front of a rear wheel of the vehicle and is supported by a frame assembly. Typically, while the frame assembly acts as a skeleton for the vehicle that supports the vehicle loads, the IC engine is functionally connected to a rear wheel of the vehicle by some end transmission means such as a sprocket and chain drive for providing torque multiplication between the engine and the rear wheel and thereby provides forward motion to the vehicle. Such saddle type vehicles have common requirements of low cost, high efficiency, good controllability throughout the entire speed range. They can either have single speed transmission system or multi-speed transmission system.

Small sized step through type saddle type vehicles of 50 cubic capacity or less have a single-speed transmission. In such vehicles there is a disadvantage of low torque at low speeds and speed limitations during high torque conditions. For example, when the saddle type vehicle is climbing a gradient on the road or if it has to pull a heavy load there is requirement of a high torque at the rear wheel to pull the vehicle, and the engine may not be able to provide the same. Further, moving at low speeds with less torque results in loss of fuel economy. Furthermore, at higher speeds, a fixed transmission ratio gives limitation to speed at which the vehicle can travel and resulting in loss of fuel economy. Hence, the engine may not be able to provide sufficient torque and the internal combustion engine may get switched off. All these drawbacks contribute to lowering of the fuel economy. Hybrid saddle type vehicles serve to address the drawbacks of engine powered saddle type vehicles as discussed in previous paragraphs. Hence, there is a need for having a hybrid system in a small capacity type saddle type vehicle, with a single speed or multi-speed transmission system to address the drawbacks by providing higher torque output at rear wheel.

Typically, hybrid saddle type vehicles of either the straddle type or the step-through type are provided with an electric motor for powering the vehicle in addition to having an IC engine. Particularly, the IC engine and the electric motor can be configured in uniquely different ways, but essentially can be classified according to the type of powertrain system it has, which determines how the internal combustion engine and the electric motor interact with each other. There are two types namely, series configuration and parallel configuration. In series configuration, a battery system is charged by the internal combustion engine, which in turn powers the electric motor to drive the hybrid vehicle. In parallel configuration, the internal combustion engine and the electric motor work together to generate the power that drives the hybrid vehicle.

In conventional saddle type hybrid vehicles, the electric motor is typically integrated within and housed in the crankcase of the IC engine. However, housing the electric motor within the crankcase of the IC engine involves extensive modifications to be made in the engine layout which is undesirable. Alternatively, the electric motor may be mounted externally on the hub of the rear wheel with the drive from the motor directly connecting to the rear wheel. However, mounting the electric motor on the hub requires extensive modifications to be made in the hub for it to receive drive both from the IC engine, and the electric motor. Further, the hub is also required to accommodate the rear braking systems. Further, conventionally since the drive of the electric motor is directly connected to the rear wheel, the rotary output of the electric motor does not get ratio advantage of any gearing system. This necessitates the use of a large powered electric motor drawing large power from the battery. This reduces the life of the battery and also reduces the fuel economy.

Some of the drawbacks of hybrid vehicles are addressed using a contemporary mild hybrid technology, in which electric motor is used as an assist. In mild hybrid technology, the internal combustion engine is the dominant motive force provider to the wheel while the electric motor provides assist in specific circumstances and does provide an all-electric power propulsion. Some of the advantages of using the mild hybrid technology include low cost, lesser complexity and lesser size of battery. Thus the cost/benefit ratio is very high. The various circumstances wherein electric motor assist can be used include starting, braking and cruising. During stop and go traffic conditions requiring quicker restart, a mild hybrid provides improved fuel efficiency as the electric motor assists the engine effectively, thereby aiding in reducing emissions as compared to conventional vehicles or conventional hybrid vehicles. The small electric motor at low rpm provides a very high torque from zero rpm. Hence, a small electric motor contributes significantly during starting to provide an assist giving an increased acceleration and better drivability feel during starting. This motor assist can also help significantly during high torque requirements such as climbing a gradient on road and carrying large loads on the vehicle. During cruising, the electric motor can provide additional torque to accelerate and achieve greater speed. The electric motor can also function as a generator and rely on regenerative braking for supplemental recharging of the battery.

The use of an electric motor of small capacity for assisting the IC engine therefore offers several advantages. However, the challenge lies in adapting and accommodating the electric motor into existing IC engine and its related components. Introducing a small electric motor within the existing engine layout of the vehicle involves extensive design and layout changes. Particularly, IC engine layout optimization is essential to make it less bulky and easy to assemble. Also, compact power train is essential to achieve stable riding behavior of the vehicle which enhances the safety. Further, it should be ensured that any change in IC engine layout should not affect the space it occupies in the saddle type vehicle as it would involve a complete redesign of frame assembly supporting the IC engine and further leading to an increase in overall cost of the saddle type vehicle. In cases where the design involves mounting of said motor on the external hub, it results in the rear wheel and the end transmission system having to be redesigned. Mounting on the hub motor also has the additional disadvantage of not having any torque ratio multiplication advantage by gearing mechanism or end transmission mechanisms due to its location. Moreover mounting said motor on the hub also affects the retrofitability of the motor.

Besides dealing with issues concerning mounting of motor within the existing vehicle layout, there is also a need to ensure that required amount of torque assist is provided at rear wheel, the overall efficiency of the vehicle is improved, better operability is achieved and transmission losses are reduced while at the same time retaining attractive features of low cost and easy drivability.

The present subject matter therefore seeks to provide a hybrid system for a saddle type vehicle by introduction of a detachably mounted torque multiplying system involving an electric motor operated by a battery connected thereto and working in parallel with the IC engine. The IC engine and electric motor have parallel power flow to the rear wheel.

The present subject matter additionally seeks to provide a hybrid system with least modifications to the existing layout of the IC engine and vehicle layout.

The present subject matter additionally seeks to provide a retrofitable electric motor that can easily be attached and detached from the saddle type vehicle when a hybrid system is not required.

The present subject matter additionally seeks to provide torque multiplication through ratio advantage by utilizing a gear train mechanism and/or an end transmission means and hence determine the size of electric motor used, substantially for the same torque output as compared to conventional mild hybrid systems.

The present subject matter additionally seeks to provide regenerative braking in order for supplementary charging of the battery.

The present subject matter seeks to provide ease of serviceability of the vehicle by easy attachment and detachment of the electric motor.

The present invention presents some of the following advantages including low vehicle weight and low cost, minimal changes to existing vehicle layout, reduced fuel consumption, improved efficiency, and better optimization. Further, torque multiplication is also obtained by utilizing the gear train mechanism and/or the end transmission means.

Accordingly, the above functionalities are achieved by providing a saddle type vehicle comprising: an internal combustion (IC) engine having a crankcase, a crankshaft supported by said crankcase, said crankshaft configured to receive rotary motion on burning of air and fuel mixture within the IC engine, an output shaft configured to receive rotary motion from the crankshaft, said output shaft operably connected to provide rotary motion output to a rear wheel of said saddle type vehicle, and a first transmission mechanism interposed between the crankshaft and the output shaft, said first transmission mechanism configured to provide variable torque rotary motion output at the output shaft . As per an embodiment of the present invention, an electric motor unit is detachably mounted on an external surface of the crankcase of the IC engine. The electric motor unit comprises of an electric motor to provide rotary motion output, a second transmission mechanism operably connected to the output shaft and interposed between the electric motor and the output shaft to provide torque multiplication rotary motion output at the output shaft. The electric motor unit is thus adapted to provide a parallel torque assist at the output shaft along with the IC engine.

As per an aspect of the present invention, the second transmission mechanism comprises of a motor shaft, a second one way clutch, a first intermediate shaft, and a second intermediate shaft. The motor shaft extends outward from the electric motor unit to be operably connected with the output shaft, and a second driven gear is freely mounted on the motor shaft. The second one way clutch has its inner race rigidly mounted on the motor shaft and its outer race rigidly mounted to the second driven gear, and said second one way clutch is disposed within the electric motor unit to permit rotary motion only from the electric motor unit to the output shaft. The first intermediate shaft is mounted parallel to the motor shaft, said first intermediate shaft comprising a third driven gear freely mounted on the first intermediate shaft and meshed with the second driven gear in the lower portion. The second intermediate shaft is mounted parallel to the first intermediate shaft, and comprises of a fourth driven gear freely mounted on the second intermediate shaft and configured to receive rotary motion output from the electric motor, and a third driving gear disposed adjacent and securely attached to the fourth driven gear freely mounted on the second intermediate shaft and configured to the meshed with the third driven gear in the upper position.

The present invention along with all the accompanying embodiments and their other advantages would be described in greater detail in conjunction with the figures in the following paragraphs.

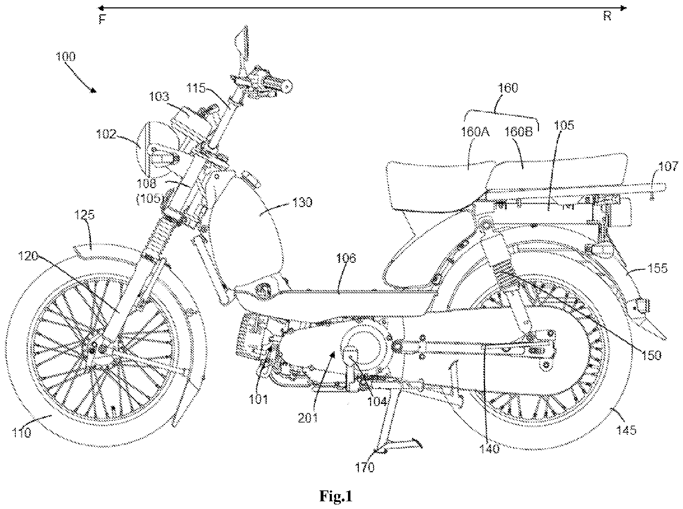

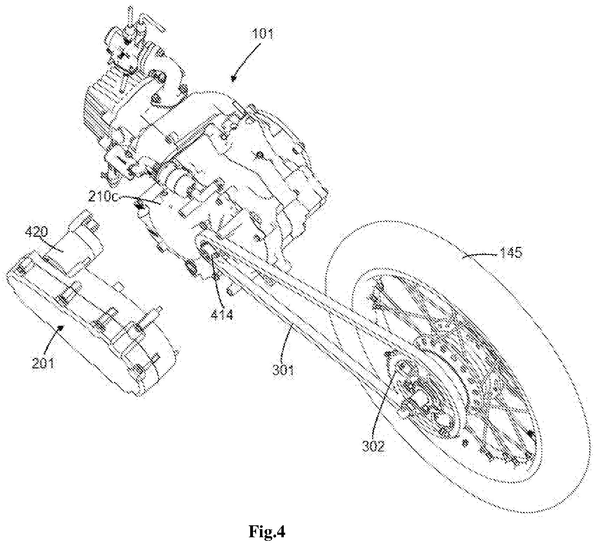

**Fig. 1****.** illustrates a left side view of an exemplary two-wheeled step-through type vehicle, in accordance with an embodiment of present invention. Said vehicle (**100**) has a mono-tube type frame assembly (**105**) extending from a front portion (**F**) to a rear portion (**R**) along a longitudinal axis (**F-R**) of said saddle type vehicle (**100**). Said frame assembly (**105**) acts as a skeleton of said vehicle. The frame assembly (**105**) extends from a head tube (**108**) in the front portion (**F**) of the vehicle till the vehicle rear portion (**R**). A steering shaft (not shown) is inserted through the head tube (**108**) and a handle bar assembly (**115**) is pivotally disposed on it. The steering shaft is connected to a front wheel (**110**) by front suspension(s) (**120**). A front fender (**125**) is disposed above the front wheel (**110**) for covering at least a portion of the front wheel (**110**). A fuel tank (**130**) is mounted on a rearwardly and downwardly extending member of the frame assembly (**105**), said member extending from the head tube (**108**). The frame assembly (**105**) forms a substantially horizontal step-through portion (**106**) with a floorboard to enable step-through mounting of a rider and to assist in carrying heavy loads. The IC engine (**101**) is mounted on the frame assembly (**105**) below the step-through portion (**106**) forming a low slung engine mounting. In an embodiment, a piston axis of the engine is horizontal i.e. parallel to a longitudinal axis of the vehicle (**100**). A swing arm (**140**) is swingably connected to the frame assembly (**105**). A rear wheel (**145**) is rotatably supported by the swing arm (**140**). One or more rear suspension(s) (**150**) are provided for ensuring riding comfort. Said rear suspension(s) are connected to the swing arm (**140**) at one end and to a portion of a rear frame member of the frame assembly (**105**) at the other end. A rear fender (**155**) is disposed above the rear wheel (**145**). A seat assembly (**160A, 160B**) is disposed rearwardly of the step-through portion (**106**) for seating of the rider. In an embodiment, the seat assembly (**160**) includes a rider seat (**160A**) and a pillion seat (**160B**). Further, the seat assembly (**160**) is positioned above the rear wheel (**145**).The vehicle is supported by a centre stand (**170**) mounted to the frame assembly (**105**). The IC engine (**101**) is connected to the rear wheel (**145**) through a transmitting means. In one embodiment, the transmitting means includes an engine sprocket (**414**) which is linked to the rear wheel (**145**) through a chain drive (shown in Fig.4).

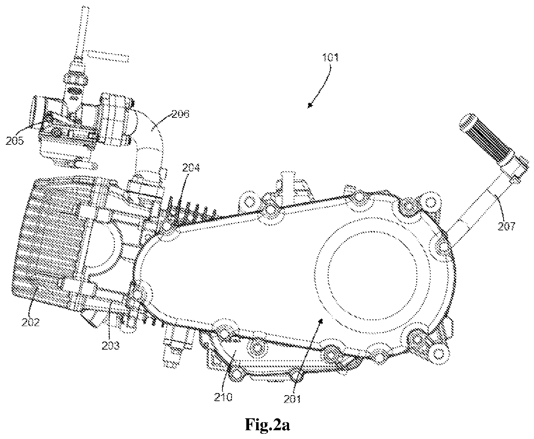

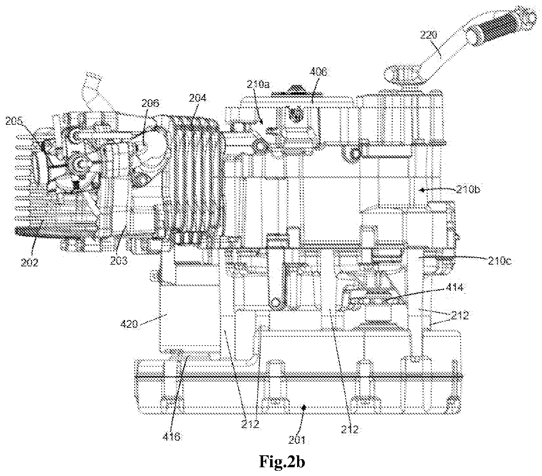

**Fig.2a** illustrates a side view of the IC engine (**101**) and **Fig. 2b****.** illustrates a top view of the IC engine in accordance with an embodiment of the present invention. The IC engine (**101**) is made up of a cylinder head (**203**), a cylinder block (**204**), a crankcase (**210**) and a cylinder head cover (**202**). The crankcase (**210**) is made up of a RH crankcase (**210a**), a LH crankcase (**210b**), and a clutch cover (**210c**). The clutch cover (**210c**) is disposed on the left hand side of the IC engine (**101**) adjacent to the LH crankcase (**210b**) and encloses a first centrifugal clutch (shown in **Fig.4**) and related transmission gear mechanisms. The IC engine (**101**) includes an air intake system (**205**, **206**), an exhaust system (not shown), and a kickstarter system (not shown) using a kickshaft (not shown). The RH crankcase (**210a**) encloses a wet magneto assembly (**406**) disposed on the right hand side of the crankshaft (shown in **Fig.4**). The wet magneto assembly (**406**) is configured to rotate along with the crankshaft to generate power which recharges a battery. Further, a centrifugal fan (shown in **Fig.4**) is disposed in front of the magneto assembly (**406**) forming part of a cooling system to cool the IC engine (**101**). A shroud (**402**) (see Fig. 4) encloses the centrifugal fan and covers the cylinder head (**203**) and cylinder block (**204**). The centrifugal fan rotates along with the crankshaft and draws atmospheric air inside and circulates it throughout the interior portions of the shroud (**402**). The IC engine (**101**) as per an aspect of the present invention supports an electric motor unit (**201**).

As per one embodiment, said electric motor unit (**201**) is disposed adjacent to the clutch cover (**210c**) and mounted on it. The clutch cover (**210c**) and the electric motor unit (**201**) are provided with a plurality of mounting bosses (**212**), which are disposed at regular intervals around each of their outer peripheries. In the present embodiment said bosses (**212**) include holes to receive fasteners. The electric motor unit (**201**) is mounted on the clutch cover (**210c**) through said plurality of bosses (**212**) and is secured thereto with fasteners. Besides aiding in mounting said motor unit (**201**) on the clutch cover (**210c**), said bosses (**212**) also aid in accommodating the engine sprocket (**414**) in a space between the electric motor unit (**201**) and the clutch cover (**210c**). Particularly, said bosses (**212**) are made to have sufficient length in order to accommodate the engine sprocket (**414**).

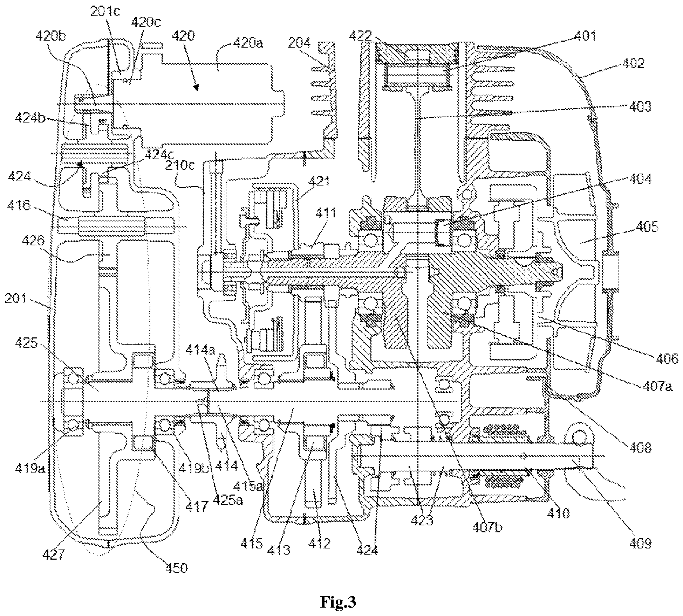

**Fig. 3****.** illustrates a cross sectional view (**X-X**) of the internal combustion engine (**101**) and the electric motor unit (**201**) according to the embodiment of the present subject matter. The IC engine comprises a reciprocating piston (**401**) and a rotatable crankshaft (**407**) within the cylinder block (**204**). Combustion occurs when air fuel mixture is burnt in the combustion chamber (**422**), resulting in transfer of pressure created during combustion to the reciprocating piston (**401**). The reciprocating motion of the piston is converted to the rotary motion of the crankshaft (**407**) having a right hand side (**407a**) and a left hand side (**407b**); by a connecting rod (**403**) through a slider crank mechanism. The rotary motion of the crankshaft (**407**) is transferred to the engine sprocket (**414**) through a transmission system including a first transmission system. The first transmission system comprises a first centrifugal clutch (**421**) disposed on the left hand side (**407b**) of the crankshaft. A first driving gear (**411**) is freely mounted to the crankshaft (**407**) and connected to the crankshaft by the first centrifugal clutch (**421**). The first centrifugal clutch (**421**) is designed to engage only at a particular rotational speed of the IC engine. This rotational speed is usually just above idling rotational speed, configured and designed for the IC engine. Hence, if the throttle is not operated by the rider, rotational speed of the IC engine decreases to idling speed and the transmission system is disengaged from the crankshaft (**407**). Once, throttle is operated, the first centrifugal clutch (**421**) engages, and the rotary motion is transmitted to the rest of the transmission system. Once, the vehicle speed is above idling speed and the first centrifugal clutch (**421**) is engaged the rotary motion is transferred to the first driving gear (**411**). The first driving gear (**411**) is meshed with a first driven gear (**412**), and the transmission ratio between the first driving gear (**411**) and first driven gear (**412**) provides the first speed reduction for the IC engine. The first driven gear (**412**) is disposed on an output shaft (**415**) and mounted on bearings. The engine sprocket (**414**) is disposed at one end of the driven shaft (**415**) projecting out of the clutch cover (**210c**). This gear train setup provides the transmission ratio operable for the engine. The first driven gear (**412**) is mounted on a first one way clutch (**413**) to prevent the rotary motion drive from transferring back to the crankshaft (**407**) from the output shaft (**415**). Particularly, as per an embodiment of the present invention, the engine sprocket (**414**) is disposed outside the LH clutch cover (**210c**) which receives rotary motion from an output shaft (**415**) of the transmission system. As may be seen in **Fig.4****,** a chain (**301**) connects the engine sprocket (**414**) to a corresponding wheel sprocket (**302**) on the rear wheel (**145**). This way rotary motion is transferred to the rear wheel (**145**). Further, as shown in Fig.3, the engine sprocket (**414**) comprises an outer gear teeth portion and an inner annular portion (**414a**) comprising internal splines and which is configured to receive a motor shaft (**425**) from the electric motor unit (**201)**. A part of the motor shaft (**425**) projects outwards and comprises external splined portion (**415a**) which correspond to the internal splines on the engine sprocket (**414**). Similarly, the output shaft (**415**) of the transmission system of the IC engine (**101**) comprises external splined portion **(425a).** Thus, the engine sprocket (**414**) receives the output shaft (**415**) from one end and the motor shaft (**425**) from the other end.

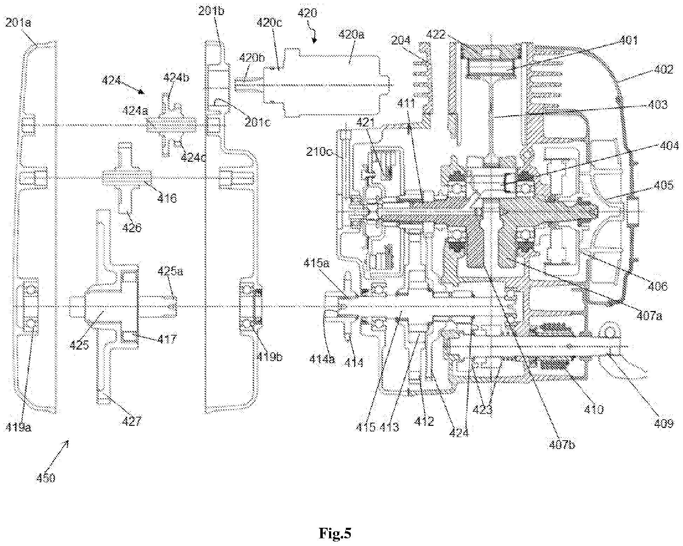

**Fig. 4** **and** **Fig.5** illustrate exploded views depicting mounting of the electric motor unit (**201**) to the IC engine (**101**) in accordance with a first embodiment of the present subject matter. Further the functional and operational aspects involved in the working of the electric motor unit (**201**) are also explained with respect to **Fig.4** **and** **Fig.5****.**

The electric motor unit (**201**) comprises: an electric motor (**420**) to provide rotary motion output to the output shaft (**415**) through a second transmission mechanism (**450**). The electric motor (**420**) as per a first embodiment of the present invention is an electric motor of a smaller capacity, typically varying from 0.3 KW to 0.5 kW capacity and preferably of brushless direct current type (BLDC). Said motor unit (201) further comprises a first housing member (**201a**) and a second housing member (**201b**), forming a space therebetween and which are assembled from either side of said electric motor (**420**) and the second transmission mechanism (**450**) to accommodate said motor (**420**) and the second transmission mechanism (**450**). Particularly, as per the present embodiment said motor (**420**) is mounted to said second housing member (**201b**) and said second transmission mechanism (**450**) is disposed between said first housing member (**201a**) and said second housing member (**201b**). As per a first embodiment of the present invention, said electric motor unit (**201**) including said motor (**420**) and said second transmission mechanism (**450**) are disposed beyond the clutch cover (**210c**) in a space adjacent to the cylinder block (**204**). Disposition of the electric motor unit (201) besides the cylinder block (**204**) aids in utilizing the space adjacent to the cylinder block (**204**) on the left hand side of the IC engine (**101**).

The electric motor (**420**) comprises an electric motor body (**420a**) cylindrical in shape, a rotary output shaft (**420b**) projecting outward from the electric motor body (**420a**) and electric motor sleeve (**420c**). The axis of the cylindrically shaped electric motor body (**420a**) and the rotary output shaft (**420b**) is parallel to a motor shaft (**425**), a first intermediate shaft (**416**), and a second intermediate shaft (**424**) of the second transmission mechanism (**450**). The second housing member (**201b**) comprises a boss portion (**201c**) for supporting the electric motor body (**420a**) through said motor sleeve (**420c**). Said boss portion (**201c**) receives the electric motor sleeve (**420c**) of said electric motor (**420**) such that, the electric motor body (**420a**) projects outwards towards the cylinder block (**204**) and the rotary output shaft (**420b**) is projected inwards towards the second transmission mechanism (**450**).

The second transmission mechanism (**450**) is interposed between the electric motor (**420**) and the output shaft (**415**) to provide variable torque rotary motion output at the output shaft (**415**). The second transmission mechanism (**450**) comprises the motor shaft (**425**) extending outward from the electric motor unit (**201**) to be operably connected with the output shaft (**415**); and a second one way clutch (**417**) mounted on the motor shaft (**425**) within the electric motor unit (**201**) to permit rotary motion only from the electric motor (**420**) to the output shaft (**415**). Particularly, the motor shaft (**425**) is supported on the first housing member (**201a**) and the second housing member (**201b**) through a pair of first roller bearings (**419a, 419b**). Each roller bearing of said pair of first roller bearings is provided on the first housing member (**201a**) and the second housing member (**201b**) respectively. The second transmission mechanism (**450**) further comprises the first intermediate shaft (**416**) mounted parallel to the motor shaft (**425**), the second intermediate shaft (**424**) mounted parallel to the first intermediate shaft (**416**). Said electric motor (**420**) is operably connected to the second intermediate shaft (**424**). The second intermediate shaft (**424**) comprises a fourth driven gear (**424b**) which is meshed with the rotary output shaft (**420b**) of the electric motor (420). Disposed adjacent to the fourth driven gear (**424b**) is the third driving gear (**424c**). Both the fourth driven gear (**424b**) and the third driving gear (**424c**) are attached freely to the second intermediate shaft (**424**) such that, the second intermediate shaft (**424a**) is held rigidly, while the two gears (fourth driven gear **424b** and third driving gear **424c**) rotate by slipping over the second intermediate shaft (**424a**). The rotary motion from the electric motor (**420**) is multiplied (torque is increased due to gearing ratio between the rotary output shaft **420b** and fourth driven gear **424b**) and is transmitted to the first intermediate shaft (**416**) through the third driving gear (**424c**). The first intermediate shaft (**416**) comprises a third driven gear (**426**) disposed freely over it and axially restrained. The third driven gear (**426**) is meshed with the third driving gear (**424c**) disposed above and meshed with a second driven gear (**427**) below, said second driven gear (**427**) attached securely over the second one way clutch (**417**). This way, the rotary motion is transmitted from the third driving gear (**424c**) to the second driven gear (**427**) through the third driven gear (**426**) and thus multiplying the torque due to the gearing ratios of the three gears. The motor shaft (**425**) transfers this rotary motion output during operation to the engine sprocket (**414**) through the second one way clutch (**417**) to permit rotary motion only from the motor (**420**) to the engine sprocket (**414**) and not vice versa. Thus, the engine sprocket (**414**) receives the output shaft (**415**) of the IC engine from the right side and the motor shaft (**425**) of the electric motor unit (**201**) from the left side.

Hence, by using a BLDC electric motor of capacity 0.3 kW to 0.5 kW, one can obtain a sufficient torque multiplication through the second transmission mechanism (**450**) to provide appropriate assist to the engine at the rear wheel. This arrangement ensures that, the electric motor (**420**) provides parallel rotary motion output (in the form of engine assist) at the engine sprocket (**414**) along with the first transmission mechanism (**411, 412**).

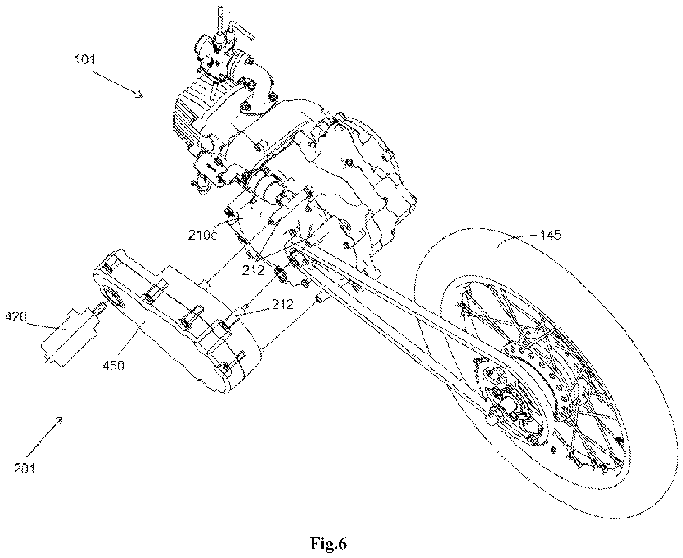

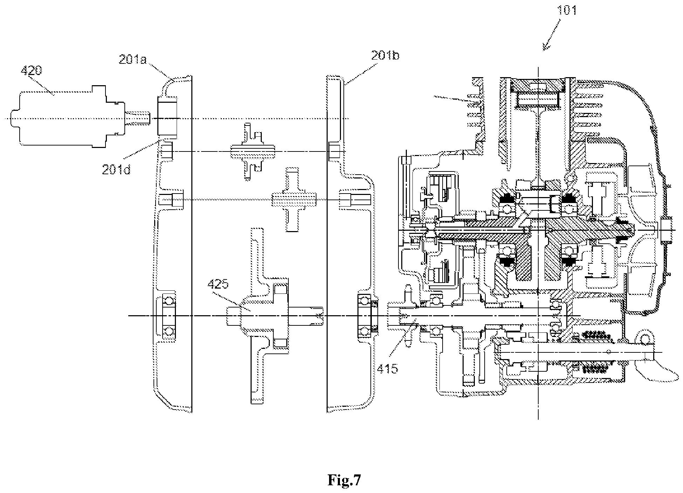

As per a second embodiment of the present invention and as may be seen in **Fig.6** and **Fig.7****,** the electric motor unit (**201**) comprises an electric motor (**420**) having capacity 2kW-3kW which is secured to said first housing member (201a) through a mounting boss (**201d**) and is disposed away from a cylinder bock (204) of the IC engine. Further, the second transmission mechanism (**450**) is disposed in a manner such that the motor shaft (**425**) faces said output shaft (**415**). The second transmission mechanism (**450**) is secured to the clutch cover (**210c**) through said plurality of mounting bosses (**212**). Providing an electric motor having capacity 2kW-3kW not only aids in ensuring that the electric motor unit (**201**) acts as an engine assist but also in ensuring that said saddle type vehicle operates as a hybrid vehicle having two independent modes including an engine mode and an electric mode.

Regenerative braking can also be achieved by the back transmission of the motion to the electric motor (**420**). If the electric motor (**420**) is replaced by a generator and appropriate circuitry is modified; e.g. by eliminating the one way clutch (**417**), the back rotation can be used for regenerative braking and supplementary charging of the battery.

## Claims

1. A saddle type vehicle (100) comprising:
an internal combustion (IC) engine (101), the internal combustion engine (101) comprising:
a crankcase (210);
a crankshaft (407), the crankshaft (407) being supported by the crankcase (210), the crankshaft (407) configured to receive rotary motion on burning of air and fuel mixture within the IC engine (101);
an output shaft (415), the output shaft (415) being configured to receive rotary motion from the crankshaft (407), the output shaft (415) being operably connected to provide rotary motion output to a rear wheel (145) of the saddle type vehicle (100);
a first transmission mechanism (411, 412, 421, 413) interposed between the crankshaft (407) and the output shaft (415), the first transmission mechanism (411, 412, 421, 413) configured to provide variable torque rotary motion output at the output shaft (415); and
an engine sprocket (414) being exposed in a width direction of the vehicle through a clutch cover (210c) wherein the clutch cover (210c) enclosing a left-hand side of the IC engine (101) in the width direction;
an electric motor unit (201), the electric motor unit (201) being detachably mounted on the external surface of the crankcase (210) of the IC engine (101), the electric motor unit (201) comprising:
an electric motor (420), the electric motor (420) being operably connected to the output shaft (415) to provide a parallel torque assist at the output shaft (415) along with the IC engine (101);
a second transmission mechanism (450), the second transmission mechanism (450) being interposed between the electric motor (420) and the output shaft (415) to provide torque multiplication rotary motion output at the output shaft (415);
wherein the electric motor unit (201) comprises a first housing member (201a) and a second housing member (201b) assembled to form a space to accommodate the electric motor (420) and the second transmission mechanism (450); and
wherein the second housing member (201b) of the electric motor unit (201) being configured to attached to the clutch cover (210c).

2. The saddle type vehicle (100) as claimed in claim 1, wherein the second transmission mechanism (450) comprises:
a motor shaft (425), the motor shaft (425) extending outward from the electric motor unit (201) to be operably connected with the output shaft (415);
a second driven gear (427), the second driven gear (427) being freely mounted on the motor shaft (425);
a second one way clutch (417), the second one way clutch (417) having its inner race rigidly mounted on the motor shaft (425) and its outer race being rigidly mounted to the second driven gear (427), the second one way clutch (417) being disposed within the electric motor unit (201) to permit rotary motion only from the electric motor unit (201) to the output shaft (415);
a first intermediate shaft (416), the first intermediate shaft (416) mounted parallel to the motor shaft (425), the first intermediate shaft (416) comprising a third driven gear (426) freely mounted on the first intermediate shaft (416) and meshed with the second driven gear (427) at a lower portion;
a second intermediate shaft (424), the second intermediate shaft (424) being mounted parallel to the first intermediate shaft (416), the second intermediate shaft (424) comprising:
a fourth driven gear (424b), the fourth driven gear (424b) being freely mounted on the second intermediate shaft (424) and configured to receive rotary motion output from the electric motor (420); and
a third driving gear (424c), the third driving gear (424c) being disposed adjacent and securely attached to the fourth driven gear (424b) freely mounted on the second intermediate shaft (424) and configured to the meshed with the third driven gear (426) in an upper position.

3. The saddle type vehicle (100) as claimed in claim 1, wherein the IC engine (101) comprises the engine sprocket (414) to provide rotary motion output to the rear wheel (145) by a chain (301), the engine sprocket (414) comprising an inner annular portion (414a) internal splines and being configured to receive the external splined portion (415a) of the output shaft (415) from one end and the external splined portion (425a) of the motor shaft (425) of the electric motor unit (201) from the other end.

4. The saddle type vehicle (100) as claimed in claim 3, wherein the clutch cover (210c) comprising a plurality of mounting bosses (212) disposed around its outer periphery; the mounting bosses (212) configured to receive corresponding mounting bosses (212) of the electric motor unit (201) for externally mounting the electric motor unit (201) on to the IC engine (101).

5. The saddle type vehicle (100) as claimed in claim 1, wherein the motor shaft (425) being supported by a pair of first roller bearings (419a,419b), each roller bearing of the pair of roller bearing being disposed on the first housing member (201a) and the second housing member (201b).

6. The saddle type vehicle (100) as claimed in claim 1, wherein the first transmission mechanism (411, 412, 421, 413) comprises:
a first centrifugal clutch (421), the first centrifugal clutch (421) being disposed on the left hand side of the crankshaft (407);
a first driving gear (411), the first driving gear (411) being freely mounted to the crankshaft (407) and connected to the crankshaft (407) by the first centrifugal clutch (421);
a first driven gear (412), the first driven gear (412) being disposed on the output shaft (415); and
a first one way clutch (413), the first one way clutch (413) being disposed on the output shaft (415), the first driven gear (412) being mounted on the first one way clutch (413), and the first one way clutch (413) configured to prevent the rotary motion drive from transferring back to the crankshaft (407) from the output shaft (415).

7. The saddle type vehicle (100) as claimed in claim 1 or claim 4, wherein the electric motor (420) has a capacity of 0.3kW to 0.5kW, and wherein the electric motor (420) being mounted to the second housing member (201b) and the second transmission mechanism (450) being secured to the clutch cover (210c) through the plurality of mounting bosses (212).

8. The saddle type vehicle (100) as claimed in claim 1, wherein the electric motor (420) being disposed adjacent to a cylinder block (204) of the IC engine (101).

9. The saddle type vehicle (100) as claimed in claim 1, wherein the electric motor (420) has a capacity of 2kW-3kW, and wherein the electric motor (420) being mounted to the first housing member (201a) and the second transmission mechanism (450) being held in the space formed between the first housing member (201a) and the second housing member (201b).

10. The saddle type vehicle (100) as claimed in claim 9, wherein the electric motor (420) being disposed away from the cylinder block (204) and the second transmission mechanism (450) being secured to the clutch cover (210c) through the plurality of mounting bosses (212).

## Patentansprüche

1. Sattelfahrzeug (100) mit:
einen Verbrennungsmotor (101), wobei der Verbrennungsmotor (101) umfasst:
ein Kurbelgehäuse (210);
eine Kurbelwelle (407), wobei die Kurbelwelle (407) von dem Kurbelgehäuse (210) getragen wird, wobei die Kurbelwelle (407) so konfiguriert ist, dass sie bei der Verbrennung eines Luft- und Kraftstoffgemischs innerhalb des Verbrennungsmotors (101) eine Drehbewegung erhält;
eine Ausgangswelle (415), wobei die Ausgangswelle (415) so konfiguriert ist, dass sie eine Drehbewegung von der Kurbelwelle (407) aufnimmt, wobei die Ausgangswelle (415) funktionsfähig verbunden ist, um eine Drehbewegungsausgabe an ein Hinterrad (145) des sattelartigen Fahrzeugs (100) bereitzustellen;
einen ersten Getriebemechanismus (411, 412, 421, 413), der zwischen der Kurbelwelle (407) und der Ausgangswelle (415) angeordnet ist, wobei der erste Getriebemechanismus (411, 412, 421, 413) so konfiguriert ist, dass er einen Drehbewegungsausgang mit variablem Drehmoment an der Ausgangswelle (415) bereitstellt; und
ein Motorkettenrad (414), das in einer Breitenrichtung des Fahrzeugs durch eine Kupplungsabdeckung (210c) freiliegt, wobei die Kupplungsabdeckung (210c) eine linke Seite des Verbrennungsmotors (101) in der Breitenrichtung umschließt;
eine Elektromotoreinheit (201), wobei die Elektromotoreinheit (201) abnehmbar an der Außenfläche des Kurbelgehäuses (210) des Verbrennungsmotors (101) angebracht ist, wobei die Elektromotoreinheit (201) umfasst:
einen Elektromotor (420), wobei der Elektromotor (420) betriebsmäßig mit der Ausgangswelle (415) verbunden ist, um eine parallele Drehmomentunterstützung an der Ausgangswelle (415) zusammen mit dem Verbrennungsmotor (101) bereitzustellen;
einen zweiten Getriebemechanismus (450), wobei der zweite Getriebemechanismus (450) zwischen dem Elektromotor (420) und der Ausgangswelle (415) angeordnet ist, um eine Drehmomentvervielfachungs-Drehbewegungsausgabe an der Ausgangswelle (415) bereitzustellen;
wobei die Elektromotoreinheit (201) ein erstes Gehäuseelement (201a) und ein zweites Gehäuseelement (201b) umfasst, die so zusammengesetzt sind, dass sie einen Raum zur Aufnahme des Elektromotors (420) und des zweiten Getriebemechanismus (450) bilden; und
wobei das zweite Gehäuseelement (201b) der Elektromotoreinheit (201) so konfiguriert ist, dass es an der Kupplungsabdeckung (210c) angebracht ist.

2. Sattelfahrzeug (100) nach Anspruch 1, wobei der zweite Übertragungsmechanismus (450) umfasst:
eine Motorwelle (425), wobei sich die Motorwelle (425) von der Elektromotoreinheit (201) nach außen erstreckt, um mit der Abtriebswelle (415) betriebsfähig verbunden zu sein;
ein zweites angetriebenes Zahnrad (427), wobei das zweite angetriebene Zahnrad (427) frei auf der Motorwelle (425) montiert ist;
eine zweite Einwegkupplung (417), wobei der innere Laufring der zweiten Einwegkupplung (417) starr an der Motorwelle (425) und ihr äußerer Laufring starr an dem zweiten angetriebenen Zahnrad (427) angebracht ist, wobei die zweite Einwegkupplung (417) innerhalb der Elektromotoreinheit (201) angeordnet ist, um eine Drehbewegung nur von der Elektromotoreinheit (201) zur Ausgangswelle (415) zu ermöglichen;
eine erste Zwischenwelle (416), wobei die erste Zwischenwelle (416) parallel zu der Motorwelle (425) montiert ist, wobei die erste Zwischenwelle (416) ein drittes angetriebenes Zahnrad (426) umfasst, das frei auf der ersten Zwischenwelle (416) montiert ist und mit dem zweiten angetriebenen Zahnrad (427) an einem unteren Abschnitt in Eingriff steht;
eine zweite Zwischenwelle (424), wobei die zweite Zwischenwelle (424) parallel zu der ersten Zwischenwelle (416) montiert ist, wobei die zweite Zwischenwelle (424) umfasst ein viertes angetriebenes Zahnrad (424b), wobei das vierte angetriebene Zahnrad (424b) frei auf der zweiten Zwischenwelle (424) montiert ist und so konfiguriert ist, dass es eine Drehbewegungsausgabe von dem Elektromotor (420) empfängt; und
ein drittes Antriebszahnrad (424c), wobei das dritte Antriebszahnrad (424c) angrenzend an das vierte angetriebene Zahnrad (424b), das frei auf der zweiten Zwischenwelle (424) montiert ist, angeordnet und sicher daran befestigt ist und so konfiguriert ist, dass es in einer oberen Position mit dem dritten angetriebenen Zahnrad (426) in Eingriff steht.

3. Sattelfahrzeug (100) nach Anspruch 1, wobei der Verbrennungsmotor (101) das Motorkettenrad (414) umfasst, um eine Drehbewegungsausgabe an das Hinterrad (145) durch eine Kette (301) bereitzustellen, das Motorkettenrad (414) einen inneren ringförmigen Abschnitt (414a) mit Innenverzahnung umfasst und so konfiguriert ist, dass es den äußeren verzahnten Abschnitt (415a) der Ausgangswelle (415) von einem Ende und den äußeren verzahnten Abschnitt (425a) der Motorwelle (425) der Elektromotoreinheit (201) von dem anderen Ende aufnimmt.

4. Sattelfahrzeug (100) nach Anspruch 3, wobei die Kupplungsabdeckung (210c) eine Vielzahl von Befestigungsvorsprüngen (212) umfasst, die um ihren Außenumfang herum angeordnet sind; wobei die Befestigungsvorsprünge (212) so konfiguriert sind, dass sie entsprechende Befestigungsvorsprünge (212) der Elektromotoreinheit (201) aufnehmen, um die Elektromotoreinheit (201) von außen an dem Verbrennungsmotor (101) zu befestigen.

5. Sattelfahrzeug (100) nach Anspruch 1, wobei die Motorwelle (425) durch ein Paar von ersten Wälzlagern (419a, 419b) gelagert ist, wobei jedes Wälzlager des Paares von Wälzlagern an dem ersten Gehäuseteil (201a) und dem zweiten Gehäuseteil (201b) angeordnet ist.

6. Sattelfahrzeug (100) nach Anspruch 1, wobei der erste Übertragungsmechanismus (411, 412, 421, 413) umfasst:
eine erste Fliehkraftkupplung (421), wobei die erste Fliehkraftkupplung (421) auf der linken Seite der Kurbelwelle (407) angeordnet ist;
ein erstes treibendes Zahnrad (411), wobei das erste treibende Zahnrad (411) frei an der Kurbelwelle (407) angebracht und mit der Kurbelwelle (407) durch die erste Fliehkraftkupplung (421) verbunden ist;
ein erstes angetriebenes Zahnrad (412), wobei das erste angetriebene Zahnrad (412) auf der Ausgangswelle (415) angeordnet ist; und
eine erste Einwegkupplung (413), wobei die erste Einwegkupplung (413) auf der Ausgangswelle (415) angeordnet ist, das erste angetriebene Zahnrad (412) auf der ersten Einwegkupplung (413) montiert ist und die erste Einwegkupplung (413) so konfiguriert ist, dass sie verhindert, dass der Drehbewegungsantrieb von der Ausgangswelle (415) zurück auf die Kurbelwelle (407) übertragen wird.

7. Sattelfahrzeug (100) nach Anspruch 1 oder Anspruch 4, wobei der Elektromotor (420) eine Leistung von 0,3 kW bis 0,5 kW hat, und wobei der Elektromotor (420) an dem zweiten Gehäuseteil (201b) angebracht ist und der zweite Übertragungsmechanismus (450) an der Kupplungsabdeckung (210c) durch die Mehrzahl von Montagevorsprüngen (212) befestigt ist.

8. Sattelfahrzeug (100) nach Anspruch 1, wobei der Elektromotor (420) benachbart zu einem Zylinderblock (204) des Verbrennungsmotors (101) angeordnet ist.

9. Sattelfahrzeug (100) nach Anspruch 1, wobei der Elektromotor (420) eine Leistung von 2 kW bis 3 kW hat und wobei der Elektromotor (420) an dem ersten Gehäuseelement (201a) angebracht ist und der zweite Übertragungsmechanismus (450) in dem zwischen dem ersten Gehäuseelement (201a) und dem zweiten Gehäuseelement (201b) gebildeten Raum gehalten wird.

10. Sattelfahrzeug (100) nach Anspruch 9, wobei der Elektromotor (420) von dem Zylinderblock (204) entfernt angeordnet ist und der zweite Getriebemechanismus (450) an der Kupplungsabdeckung (210c) durch die Mehrzahl von Montagevorsprüngen (212) befestigt ist.

## Revendications

1. Véhicule de type selle (100) comprenant :
un moteur à combustion interne (IC) (101), le moteur à combustion interne (101) comprenant :
un carter (210) ;
un vilebrequin (407), le vilebrequin (407) étant supporté par le carter (210), le vilebrequin (407) étant configuré pour recevoir un mouvement rotatif lors de la combustion du mélange d'air et de carburant à l'intérieur du moteur à combustion interne (101) ;
un arbre de sortie (415), l'arbre de sortie (415) étant configuré pour recevoir le mouvement rotatif du vilebrequin (407), l'arbre de sortie (415) étant relié de manière opérationnelle pour fournir un mouvement rotatif à une roue arrière (145) du véhicule de type selle (100) ;
un premier mécanisme de transmission (411, 412, 421, 413) interposé entre le vilebrequin (407) et l'arbre de sortie (415), le premier mécanisme de transmission (411, 412, 421, 413) configuré pour fournir une sortie de mouvement rotatif à couple variable à l'arbre de sortie (415) ; et
un pignon de moteur (414) exposé dans le sens de la largeur du véhicule à travers un couvercle d'embrayage (210c), le couvercle d'embrayage (210c) entourant le côté gauche du moteur à combustion interne (101) dans le sens de la largeur ;
une unité de moteur électrique (201), l'unité de moteur électrique (201) étant montée de manière amovible sur la surface externe du carter (210) du moteur à combustion interne (101), l'unité de moteur électrique (201) comprenant :
un moteur électrique (420), le moteur électrique (420) étant relié de manière opérationnelle à l'arbre de sortie (415) pour fournir une assistance de couple parallèle à l'arbre de sortie (415) avec le moteur à combustion interne (101) ;
un second mécanisme de transmission (450), le second mécanisme de transmission (450) étant interposé entre le moteur électrique (420) et l'arbre de sortie (415) pour fournir une sortie de mouvement rotatif de multiplication de couple à l'arbre de sortie (415) ;
dans lequel l'unité de moteur électrique (201) comprend un premier élément de boîtier (201a) et un second élément de boîtier (201b) assemblés pour former un espace destiné à accueillir le moteur électrique (420) et le second mécanisme de transmission (450) ; et
le deuxième élément de boîtier (201b) de l'unité de moteur électrique (201) étant configuré pour être fixé au couvercle d'embrayage (210c).

2. Véhicule de type selle (100) selon la revendication 1, dans lequel le second mécanisme de transmission (450) comprend :
un arbre moteur (425), l'arbre moteur (425) s'étendant vers l'extérieur de l'unité de moteur électrique (201) pour être relié de manière opérationnelle à l'arbre de sortie (415) ;
un deuxième engrenage entraîné (427), le deuxième engrenage entraîné (427) étant monté librement sur l'arbre moteur (425) ;
un deuxième embrayage unidirectionnel (417), le deuxième embrayage unidirectionnel (417) ayant sa course intérieure montée rigidement sur l'arbre moteur (425) et sa course extérieure étant montée rigidement sur le deuxième engrenage entraîné (427), le deuxième embrayage unidirectionnel (417) étant disposé à l'intérieur de l'unité de moteur électrique (201) pour permettre un mouvement rotatif uniquement de l'unité de moteur électrique (201) à l'arbre de sortie (415) ;
un premier arbre intermédiaire (416), le premier arbre intermédiaire (416) monté parallèlement à l'arbre moteur (425), le premier arbre intermédiaire (416) comprenant un troisième engrenage entraîné (426) monté librement sur le premier arbre intermédiaire (416) et engrené avec le deuxième engrenage entraîné (427) à une partie inférieure ;
un deuxième arbre intermédiaire (424), le deuxième arbre intermédiaire (424) étant monté parallèlement au premier arbre intermédiaire (416), le deuxième arbre intermédiaire (424) comprenant :
un quatrième engrenage entraîné (424b), le quatrième engrenage entraîné (424b) étant monté librement sur le deuxième arbre intermédiaire (424) et configuré pour recevoir la sortie de mouvement rotatif du moteur électrique (420) ; et
un troisième pignon d'entraînement (424c), le troisième pignon d'entraînement (424c) étant adjacent et solidement fixé au quatrième pignon d'entraînement (424b) monté librement sur le deuxième arbre intermédiaire (424) et configuré pour s'engrener avec le troisième pignon d'entraînement (426) dans une position supérieure.

3. Véhicule de type selle (100) selon la revendication 1, dans lequel le moteur à combustion interne (101) comprend le pignon de moteur (414) pour fournir une sortie de mouvement rotatif à la roue arrière (145) par une chaîne (301), le pignon moteur (414) comprend une partie annulaire interne (414a) à cannelures internes et est configuré pour recevoir la partie cannelée externe (415a) de l'arbre de sortie (415) à partir d'une extrémité et la partie cannelée externe (425a) de l'arbre moteur (425) de l'unité de moteur électrique (201) à partir de l'autre extrémité.

4. Véhicule de type selle (100) selon la revendication 3, dans lequel le couvercle d'embrayage (210c) comprend une pluralité de bossages de montage (212) disposés autour de sa périphérie extérieure ; les bossages de montage (212) configurés pour recevoir des bossages de montage correspondants (212) de l'unité de moteur électrique (201) pour le montage externe de l'unité de moteur électrique (201) sur le moteur à combustion interne (101).

5. Véhicule de type selle (100) selon la revendication 1, dans lequel l'arbre moteur (425) est supporté par une paire de premiers roulements à rouleaux (419a, 419b), chaque roulement à rouleaux de la paire de roulements à rouleaux étant disposé sur le premier élément de boîtier (201a) et le second élément de boîtier (201b).

6. Véhicule de type selle (100) selon la revendication 1, dans lequel le premier mécanisme de transmission (411, 412, 421, 413) comprend :
un premier embrayage centrifuge (421), le premier embrayage centrifuge (421) étant disposé sur le côté gauche du vilebrequin (407) ;
un premier pignon d'entraînement (411), le premier pignon d'entraînement (411) étant monté librement sur le vilebrequin (407) et relié au vilebrequin (407) par le premier embrayage centrifuge (421) ;
un premier engrenage entraîné (412), le premier engrenage entraîné (412) étant disposé sur l'arbre de sortie (415) ; et
un premier embrayage unidirectionnel (413), le premier embrayage unidirectionnel (413) étant disposé sur l'arbre de sortie (415), le premier engrenage entraîné (412) étant monté sur le premier embrayage unidirectionnel (413), et le premier embrayage unidirectionnel (413) configuré pour empêcher l'entraînement du mouvement rotatif de revenir sur le vilebrequin (407) à partir de l'arbre de sortie (415).

7. Véhicule de type selle (100) selon la revendication 1 ou la revendication 4, dans lequel le moteur électrique (420) a une capacité de 0,3kW à 0,5kW, et dans lequel le moteur électrique (420) étant monté sur le second élément de boîtier (201b) et le second mécanisme de transmission (450) étant fixé au couvercle d'embrayage (210c) à travers la pluralité de bossages de montage (212).

8. Véhicule de type selle (100) selon la revendication 1, dans lequel le moteur électrique (420) est disposé à côté d'un bloc-cylindres (204) du moteur à combustion interne (101).

9. Véhicule de type selle (100) selon la revendication 1, dans lequel le moteur électrique (420) a une capacité de 2kW-3kW, et dans lequel le moteur électrique (420) est monté sur le premier élément de boîtier (201a) et le second mécanisme de transmission (450) est maintenu dans l'espace formé entre le premier élément de boîtier (201a) et le second élément de boîtier (201b).

10. Véhicule de type selle (100) selon la revendication 9, dans lequel le moteur électrique (420) est disposé à l'écart du bloc-cylindres (204) et le second mécanisme de transmission (450) est fixé au couvercle d'embrayage (210c) par l'intermédiaire de la pluralité de bossages de montage (212).
